# EUROPÄISCHE PATENTSCHRIFT

(11) **EP 0 833 063 B1**
(45) Veröffentlichungstag und Bekanntmachung des Hinweises auf die Patenterteilung: **31.07.2002**
(21) Anmeldenummer: 97115672.4
(22) Anmeldetag: 10.09.1997
(51) Int. Cl.: F16B 5/04, F16B 19/06, F16B 19/08

(54) **Stanzniet**
Piercing rivet
Rivet poinçonnant

(30) Priorität: 11.09.1996 DE 19649755; 21.12.1996 DE 19653924; 17.01.1997 DE 19701465
(43) Veröffentlichungstag der Anmeldung: 01.04.1998
(73) Patentinhaber: Richard Bergner GmbH & Co, 91126 Schwabach (DE); AUDI AG, 85045 Ingolstadt (DE)
(72) Erfinder: Marko, Ingobert, D-90469 Nürnberg (DE); Thomala, Wolfgang, Dr.-Ing., D-91126 Rednitzhembach (DE); Haldenwanger, Hans-Günther, D-85055 Ingolstadt (DE); Kudliczka, Harald, D-85053 Ingolstadt (DE); Schmit, Georg, D-86676 Dinkelshausen (DE)
(74) Vertreter: Tergau, Enno, Dipl.-Ing.

(56) Entgegenhaltungen:
- EP-A- 0 216 405
- DE-A- 2 155 513
- BUDDE LOTHAR U.A.: "WEITERENTWICKLUNG DER STANZNIETTECHNIK" BLECH ROHRE PROFILE, Nr. 39, 1992, Seiten 310-314, XP002053578
- HAHN,ORTWIN U. A.: "STANZNIETEN OBERFLTCHENVEREDELTER" BLECH ROHRE PROFILE, Bd. 42, 1995, Seiten 100-107, XP002053579
- BUDDE,LOTHAR U.A.: "STANZNIETEN IST ZUKUNFTTRÄCHTIG" BÄNDER BLECHE ROHRE, Nr. 1, 1991, Seiten 94-100, XP002053580

## Beschreibung

Die Erfindung betrifft ein Hilfsfügeteil zum Fügen von Blechen, insbesondere Blechen aus Leichtmetall entsprechend dem ersten Teil des Anspruchs 1 (EP 0 216 405 A). Leichtmetalle sind beispielsweise definiert in **"Brockhaus - Naturwissenschaften und Technik", Band 3, Wiesbaden 1983, S. 164 (ISBN 3-7653-0357-7).**

### Hintergrund der Erfindung

Es ist bekannt, zwei oder mehrere Bleche mittels der Stanzniettechnik miteinander dauerhaft zu verbinden. Das Stanznieten ist beispielsweise bekannt aus **Budde, Lothar u. a., "Stanznieten ist zukunftsträchtig in der Blechverarbeitung", in Bänder Bleche, Rohre, Ausgabe 5, 1991, S. 94 ff.**

Aus dieser Publikation ist insbesondere bekannt, das Hilfsfügeteil entweder als Vollniet oder als Halbhohlniet auszugestalten (S. 95). Die vorliegende Erfindung betrifft ein als Halbhohlniet ausgestaltetes Hilfsfügeteil. Ferner ist in der Publikation beschrieben, daß beim Stanznieten der Halbhohlniet in einem ununterbrochenen Fügevorgang zunächst durch das stempelseitige Blech, beim Mehrlagenstanznieten noch durch weitere Bleche, gedrückt wird, um im matrizenseitigen Blech plastisch verformt zu werden. Hierbei erhält der Halbhohlniet im plastisch umgeformten Werkstoff der zu vernietenden Teile über Kragenbildung seinen Schließkopf. Der während des Stanzvorgangs abgetrennte Stanzbutzen verbleibt hierbei im Schaft des Halbhohlniets.

Aus **Hahn, Ortwin u. a., "Stanznieten oberflächenveredelter Stahlbleche", in BLECH ROHRE PROFILE, Ausgabe 42, 1995, S. 100 ff** ist des weiteren bekannt, insbesondere Stahlbleche mit Stanznieten zu fügen. Zunächst ist auf S. 100 der Veröffentlichung der Hinweis enthalten, daß beim Stanznieten der Halbhohlniet zunächst während des Scherschneidvorgangs an dem stempelseitigen Blech als Einwegschneidstempel wirksam ist, während der Halbhohlniet zusammen mit dem matrizenseitigen Blech durch plastische Verformung einen Schließkopf ausbildet. Der Halbhohlniet muß folglich geeignet sein, zunächst das stempelseitige Blech durchzustanzen und sich anschließend im matrizenseitigen Blech plastisch zu verformen.

In der Veröffentlichung Hahn u. a. ist auf den Seiten 103 - 106 insbesondere das Stanznieten mit Halbhohlniet beschrieben. Hierbei findet sich der Hinweis, daß man bei Halbhohlnieten zunächst Halbhohlniete mit freier Nietfußgeometrie, im Text als "Typ I" bezeichnet, gewählt hat. Eine als "Typ II" bezeichnete 1. Optimierungsstufe lehrt den Fachmann, eine definierte Nietfußgeometrie am Halbhohlniet vorzusehen. Eine zweite Optimierungsstufe des Halbhohlniets sehen die Autoren in Hahn u. A. im Typ III des Halbhohlniets, bei welchem neben einer definierten Nietfußgeometrie Ausrundungen im Bereich des Nietkopfs vorgesehen sind (S. 105).

Eine weitere Veröffentlichung von **Budde, Lothar u. a. mit dem Titel "Weiterentwicklung der Stanzniettechnik", in BLECH ROHRE PROFILE, AUSGABE 39, 1992, S. 310 ff**

zeigt auf S. 312 in Bild 7 Halbhohlniete mit definierter Nietfußgeometrie. Zur Verbesserung des Schneidverhaltens des Stanzniets geht sowohl aus der Bildinformation des Bildes 7 als auch aus dem zugehörigen Text hervor, daß die Autoren es als vorteilhaft ansehen, den Nietfuß vorzugsweise mit einem Fasenwinkel von 60° anzufasen. Als besonders vorteilhaft wird eine Innenfase mit einem Fasenwinkel von 60° bezeichnet. Dies deckt sich mit der in der Veröffentlichung Hahn u.A. in Bild 13 gegebenen Bildinformation, welche die erste Optimierungsstufe = Typ II und die zweite Optimierungsstufe = Typ III des Halbhohlniets zeigt. Beide Optimierungsstufen zeigen ebenfalls Halbhohlniete mit jeweils mit α bezeichneter Innenfase.

Die letztgenannte Veröffentlichung von Budde u. A. von 1992 beschäftigt sich insbesondere mit dem Fügen von Aluminiumblechen. Aus sämtlichen vorerwähnten Veröffentlichungen, insbesondere jedoch aus der letztgenannten Veröffentlichung von Budde u. A., dort S. 311 rechte Spalte, geht hervor, daß auch zum Fügen von Aluminiumblechen sowohl Stanzniete als auch Matrizen zum Einsatz kommen, welchen denjenigen zum Fügen gleich dicker Stahlbleche entsprechen. Als besonders vorteilhaft werden angesehen Halbhohlniete aus Stahl mit einer Innenfase am Nietfuß mit einem Fasenwinkel von 60°.

### Technisches Problem

Die bekannten Halbhohlniete aus Stahl zeichnen sich durch eine extrem hohe Zugfestigkeit in einem Bereich von etwa 1200 bis 1400 N/mm² aus. Aufgrund dieser hohen Zugfestigkeit ist es auch möglich, mit der scharfen, ringförmigen Schneide eines Stahl-Halbhohlniets und einem sich daran anschließenden Nietschaft mit geringer Wandstärke zwei Bleche mittels Stanznieten miteinander zu verbinden.

Nachteilig bei der Verwendung von Halbhohlnieten zum Verbinden von Leichtmetallblechen, insbesondere Blechen aus Aluminium oder Aluminiumlegierungen ist jedoch das gegenüber Leichtmetallen sehr viel höhere Eigengewicht der Stahlstanzniete. Dieses höhere Gewicht der Stahlstanznieten beruht auf der sehr viel höheren Dichte von Eisenmetallen gegenüber Nichteisenmetallen, insbesondere Leichtmetallen. Vor allem im Bereich der Fahrzeugtechnik, dort im Karosseriebau, steigt die Verwendung von Aluminiumblechen, um das Eigengewicht der Karosserie zu verringern. Mit der Verringerung des Eigengewicht der Karosserie ergeben sich auch sogenannte Sekundäreffekte, weil andere Fahrzeugbauteile infolge des geringeren Karosseriegewichts und damit des auch geringeren Gesamtgewichts ebenfalls massenoptimiert werden können, beispielsweise Bremsen, Lenkungen und deren Teile und Räder etc.. Dem Trend zur Verwendung von Leichtmetallblechen, insbesondere Aluminiumblechen, im Karosseriebau zur Gewichtsverringerung folgend wird auch vermehrt gefordert, gewichtsreduzierte Hilfsfügeteile, also Halbhohlnieten aus Leichtmetall einzusetzen.

Die Verwendung herkömmlicher Stahlstanzniete zum Fügen von Leichtmetallblechen, insbesondere Aluminiumblechen, ist weiterhin nachteilig wegen der unterschiedlichen elektrochemischen Potentiale von Stahl einerseits und Aluminium andererseits. Diese elektrochemischen Potentialunterschiede führen unvermeidlich beim Fügen von Aluminiumblechen mit Stahlstanznieten zur Kontaktkorrosion. Zur Vermeidung von Kontaktkorrosion ist es zwar aus der erstgenannten Veröffentlichung von Budde u. A. aus dem Jahre 1991, dort S. 96 bekannt, die Nietelemente mit einer aufwendig anzubringenden und damit teuren Oberflächenbeschichtung zu versehen. Fertigungstechnisch wünschenswert, weil einfacher, ist es aber, Bleche und Fügeteile ähnlichen elektrochemischen Potentials verwenden zu können, um auf die aufwendige und kostenspieliege Oberflächenbeschichtung verzichten zu können.

Schließlich erschwert die Verwendung von Hilfsfügeteilen und zu fügenden Blechen aus unterschiedlichen Werkstoffen die Wiederaufbereitung derart gefügter Teile. Beispielsweise muß bei der Wiederaufbereitung von verschrotteten Fahrzeugkarosserien bei der Verwendung von Aluminiumblechen einerseits und Stahlstanznieten andererseits das Stahlmaterial vom Aluminiummaterial aufwendig wieder getrennt werden, bevor der Stahl und das Aluminium getrennt der Wiederaufbereitung oder Entsorgung zugeführt werden können.

Ausgehend von diesen Problemen und dem dargestellten Stand der Technik liegt der Erfindung die Aufgabe zugrunde, ein zum Fügen, insbesondere Stanznieten von Leichtmetallblechen, gegenüber dem Stand der Technik verbessertes Hilfsfügeelement zu schaffen.

### Erfindung

Diese Aufgabe löst der im Anspruch 1 angegebene Halbhohlniet aus Leichtmetall mit stumpfem Nietfuß. Die Erfindung beruht auf der Erkenntnis, daß die für Halbhohlniete aus Stahl als besonders vorteilhaft nachgewiesenen Nietgeometrien für Halbhohlniete aus Leichtmetall unbrauchbar sind. Werden nämlich die im Stand der Technik als besonders vorteilhaft angesehenen Halbhohlnietgeometrien mit angefastem Nietfuß und Nietschaft mit geringer Schaftwandstärke für Halbhohlniete aus Leichtmetall verwendet, ergibt sich immer wieder das Problem, daß sich der so gestaltete Leichtmetallhalbhohlniet bereits beim Stanzvorgang plastisch verformt, ohne jedoch das dem Stempel zugewandte Blech durchzustanzen. Insbesondere tritt immer wieder das Problem plastischer Verformungen der Stirnfläche des Nietfußes während des Stanzprozesses auf, was beim Stanzprozeß jedoch unerwünscht ist. Eine plastische Verformung des Nietfußes soll nämlich erst nach dem Stanzen in dem der Matrize zugewandten Leichtmetallblech zur Schaffung des Schließkopfes auftreten.

Versuche haben gezeigt, daß bei der Verwendung von Leichtmetallen als Halbhohlnietwerkstoff es gerade vorteilhaft ist, den Nietfuß möglichst stumpf auszubilden. Weiterhin ist es vorteilhaft, die Wandstärke des Nietschafts gegenüber Stahlhalbhohlnieten zu erhöhen. Mit der Erfindung wird also der nach dem Stand der Technik eingeschlagene Entwicklungspfad überraschenderweise bewußt verlassen.

Mit der Erfindung ist folglich erstmals auch das im Stand der Technik vorherrschende Vorurteil überwunden worden, die Nietgeometrie einer aufwendigen Optimierung unterziehen zu müssen, um einen Halbhohlniet mit befriedigenden, für den Großserieneinsatz geeigneten Eigenschaftenschaften zu erhalten.

Darüber hinaus ist es mit der Erfindung erstmals gelungen, mit technisch einfachen Mitteln, einen großserientauglichen Halbhohlniet aus Leichtmetall zur Verfügung zu stellen.

Die rückbezogenen Ansprüche betreffen Weiterbildungen des Erfindungsgegenstands.

Die Verwendung von Aluminium bzw. einer Aluminiumlegierung als Werkstoff für den erfindungsmäßigen Halbhohlniet stand bei dessen Entwicklung im Vordergrund, weshalb es sich auch um eine bevorzugte Werkstoffauswahl handelt. Gleichwohl ist davon auszugehen, daß sich die Erfindung für sämtliche Halbhohlstanzniete mit einer Zugfestigkeit etwa im Bereich von 400 bis 450 N/mm², also Niete aus Werkstoffen mit relativ geringer Zugfestigkeit eignet. Die im Anspruch 3 vorgeschlagene zylindrische Geometrie des Nietschafts ist geometrisch einfach und damit kostengünstig herstellbar.

Die Ansprüche 4 bis 7 betreffen jeweils eine als besonders vorteilhaft angesehene Oberflächengestalt der Nietfußstirnfläche. Die Ansprüche 8 bis 11 betreffen vorteilhafte Abmessungen der Stirnbreite des Nietfußes, also der Wandstärke des Nietschafts im Bereich des Nietfußes im Verhältnis zum Außendurchmesser des Nietfußes, also des Nietschaftdurchmessers am Nietfuß. Als besonders vorteilhaft wird eine Wandstärke bzw. Stirnbreite des Nietfußes angesehen, welche einen Wert um 15% des Nietfußaußendurchmessers beträgt.

Ein weiterer für die Anwendbarkeit von Leichtmetall-Halbhohlnieten entscheidender Parameter ist der sich aus dem Verhältnis der Schafthohlraumlänge zum Nietfußaußendurchmesser ergebende Quotient. Als besonders vorteilhaft wird ein Quotient mit einem Wert um 0,6 angesehen.

Als großserientauglich wird deshalb ein Halbhohlniet angesehen mit einer Stirnbreite, welcher um die 15 % des Nietfußaußendurchmessers beträgt und dessen Schafthohlraumlänge dem 0,6-fachen Wert des Nietfußaußendurchmessers entspricht.

### Ausführungsbeispiel

Anhand des in den Figuren dargestellten Ausführungsbeispiels ist die Erfindung näher erläutert. Es zeigen:
- Fig.1: den auf die zu fügenden Aluminiumbleche aufgesetzten Halbhohlniet,
- Fig.2: das Durchtrennen (Lochen) der oberen Blechlage und die gleichzeitig beginnende Verformung der unteren Blechlage,
- Fig.3: das Verspreizen des Halbhohlniets mit der unteren Blechlage zu einem geschlossenen Schließkopf,
- Fig.4: die fertig gefügte Nietverbindung und
- Fig.5: eine teilweise geschnittene Seitenansicht des erfindungsmäßigen Stanzniets.

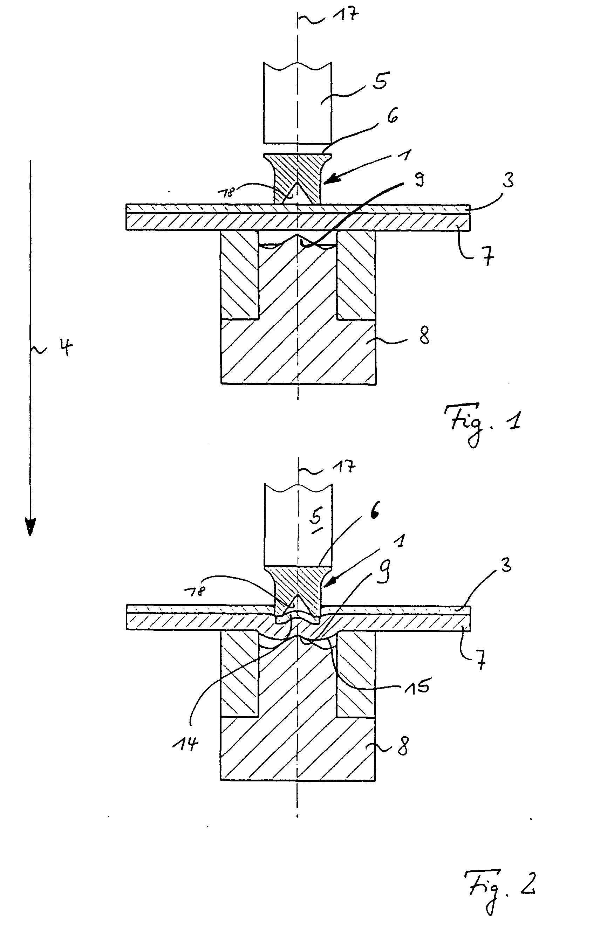

Der Halbhohlniet 1 steht mit seiner Nietfußstirnfläche 2 auf dem die obere Blechlage beim Ausführungsbeispiel bildenden oberen Aluminiumblech 3 auf. In Fig.1 ist der in Stanzrichtung 4 längs verschiebliche Stempel 5 der Stanznietvorrichtung in seiner Ruheposition dargestellt. Beim Nietvorgang beaufschlagt der Stempel 5 den Nietkopf 6.

In Stanzrichtung 4 ist unterhalb des oberen Aluminiumblechs 3 das die untere Blechlage beim Ausführungsbeispiel bildende untere Aluminiumblech 7 angeordnet. Das untere Aluminiumblech 7 liegt auf der Matrize 8 auf. An der Matrize 8 erkennbar ist der Nietdorn 9.

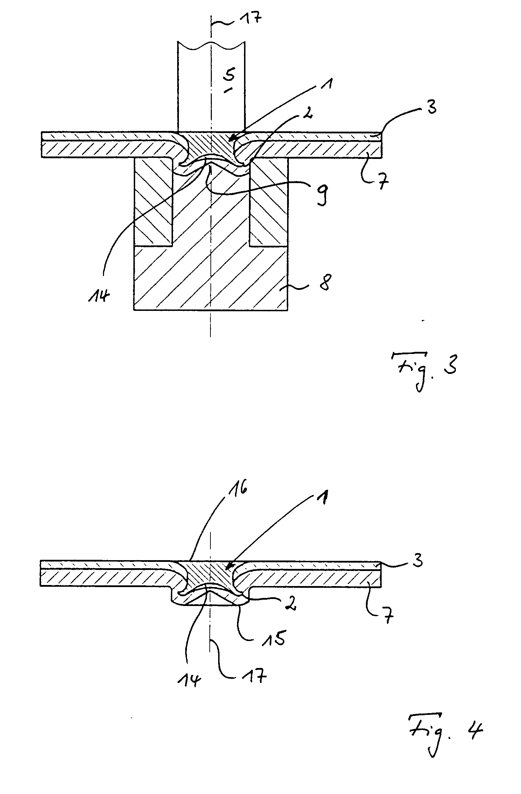

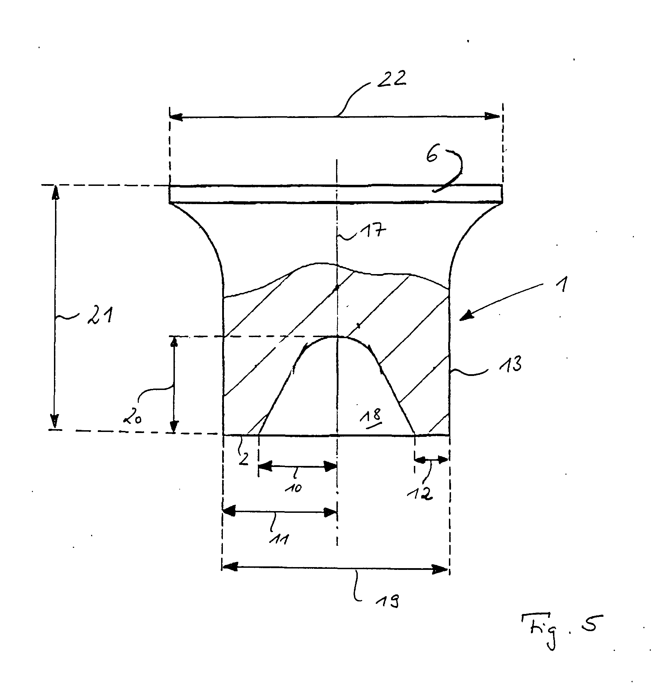

Die sich aus der Differenz des Nietfußinnenradius 10 und des Nietfußaußenradius 11 ergebende Stirnbreite 12 des Nietfußes ist so dimensioniert, daß der Nietschaft 13 stabil genug ist, beim Stanzen das obere Aluminiumblech 3 zu durchtrennen, also zu lochen, was in Fig.2 dargestellt ist. Beim Lochen des oberen Alumiumblechs 3 wird der Stanzbutzen 14 aus dem oberen Aluminiumblech 3 ausgestanzt. Beim Lochen des oberen Aluminiumblechs 3 wird das untere Aluminiumblech 7 durch den sich in der Stanzrichtung 4 bewegenden Stempel 5 auf dem Nietdorn 9 der Matrize 8 verformt und bildet einen napfartigen Schließkopf 15 aus. Beim Stanznieten locht folglich der Halbhohlniet 1 zunächst das obere Aluminiumblech und beginnt sich sodann zu verspreizen. Beim Verspreizen verkrallt sich der Nietfuß im Bereich des Schließkopfs 15 im Blechmaterial des unteren Aluminiumblechs. Da das untere Aluminiumblech 7 nur umgeformt wird, ist die in Fig.4 dargestellte fertige Stanznietverbindung im Bereich des Schließkopfs 15 absolut flüssigkeits- und gasdicht. Bei der in Fig.4 dargestellten Stanznietverbindung wird der dem Schließkopf 15 gegenüberliegende Bereich mit dem Nietkopf 6 des Halbhohlniets 1 als Setzkopf 16 der Nietverbindung bezeichnet.

Der im Ausführungsbeispiel gezeigte Halbhohlniet 1 ist zu seiner Mittellängsachse 17 rotationssymmetrisch aufgebaut. Der Nietschaft 13 ist beim erfindungsmäßigen Halbhohlniet 1 zylinderförmig. Im Bereich des Nietkopfs 6 geht die zylindrische Kontur des Nietschafts 13 über in einen sich kegelstumpfartig erweiternden Abschnitt mit konkav gekrümmten Seitenflächen.

Am Nietfuß ist ein sich zu den Nietfußstirnflächen 2 hin kegelförmig erweiternder Hohlraum 18 ausgebildet. Der Hohlraum 18 weist als Öffnungsrand am Nietfuß die kranzartige, kreisförmige Nietfußstirnfläche 2 auf. Der Halbhohlniet 1 steht auf der im Hohlraum 18 umschließenden Ringfläche, nämlich der Nietfußstirnfläche 2, solange er unverformt ist, beispielsweise in der Darstellung der Fig.1.

Die erfindungsmäßige Besonderheit des Aluminium-Halbhohlniets besteht darin, daß die Oberflächenkontur der Nietfußstirnfläche 2 nicht als spitz zulaufende Schneide, sondern als plane, konkave oder konvexe, stumpf zulaufende Fläche ausgebildet ist.

Die Stirnbreite 12 ist vorzugsweise größer als 7% des Nietfußaußendurchmessers 19. Diese Dimensionierung der Stirnbreite 12 gewährleistet einen hinreichend großen Querschnitt zum Lochen des oberen Aluminiumblechs 3. Gleichzeitig ist die so zwischen dem Hohlraum 18 und der Außenwand des Nietschafts 13 gebildete Ringwandung des Halbhohlniets 1 so dimensioniert, daß ein plastisches Spreizen des Nietschafts 13 beim Zusammenwirken mit dem unteren Aluminiumblech 7 zur Bildung des Schließkopfs 15 stets gewährleistet ist.

Der Kegelwinkel des kegelförmigen Hohlraums 18 beträgt vorzugsweise etwa 50° bis 60°. Beim Ausführungsbeispiel in Fig.5 beträgt der Kegelwinkel 54°.

Das Verhältnis der Schafthohlraumlänge 20 zum Nietfußaußendurchmesser 19 beträgt etwa 0,6. Ist die Schafthohlraumlänge 20 nämlich zu gering, spreizt der Nietschaft 13 des Halbhohlniets 1 sich nämlich nach dem Lochen des oberen Aluminiumblechs 3 nicht ausreichend auf. Ist die Schafthohlraumlänge 20 dagegen zu groß gewählt, kann dies das Lochen des oberen Aluminiumblechs 3 beeinträchtigen.

Die Gesamtnietlänge 21 und die Schafthohlraumlänge 20 haben beim Ausführungsbeispiel ein Verhältnis von 5:3. Der Nietkopfdurchmesser 22 entspricht etwa dem 1,5 fachen Wert des Nietfußaußendurchmessers 19.

Das Ausführungsbeispiel ziegt also ein als Halbhohlniet (1) ausgebildetes Hilfsfügeelement zum Fügen zweier Aluminiumbleche (3), (7) in Anwendung der Stanzniettechnik, wobei der Halbhohlniet (1) aus Leichtmetall besteht und die Stirnfläche (2) des Nietfußes eine stumpfe Oberflächengestalt aufweist.

### Bezugszeichenliste

- 1: Halbhohlniet
- 2: Nietfußstirnfläche
- 3: oberes Aluminiumblech
- 4: Stanzrichtung
- 5: Stempel
- 6: Nietkopf
- 7: unteres Aluminiumblech
- 8: Matrize
- 9: Nietdorn
- 10: Nietfußinnenradius
- 11: Nietfußaußenradius
- 12: Stirnbreite
- 13: Nietschaft
- 14: Stanzbutzen
- 15: Schließkopf
- 16: Setzkopf
- 17: Mittellängsachse
- 18: Hohlraum
- 19: Nietfußaußendurchmesser
- 20: Schafthohlraumlänge
- 21: Gesamtnietlänge
- 22: Nietkopfdurchmesser

## Patentansprüche

1. Halbhohlniet aus Leichtmetall
• mit einem stumpfen Nietfuß (2),
• mit einem zylinderförmigen Nietschaft (13),
• mit einer senkrecht zur Mittellängsachse (17) des Nietschaftes (13) verlaufenden Nietfußstirnfläche (2),
**gekennzeichnet durch**
• eine zwischen 8% und 20% des Nietfußaußendurchmessers (19) betragende Stirnbreite des Nietfußes (2),
• einen sich zur Nietfußstirnfläche (2) hin kegelförmig erweiternden Hohlraum (18) am Nietfuß (2),
• einen Quotienten aus Schafthohlraumlänge (20) und Nietfußaußendurchmesser (19) zwischen 0,3 und 0,7, sowie
• einen Kegelwinkel des sich zur Nietfußstirnfläche (2) hin kegelförmig erweiternden Hohlraums (18) zwischen 50° und 60°.

2. Niet nach Anspruch 1,
**gekennzeichnet durch** Aluminium bzw. eine Aluminiumlegierung als Leichtmetall.

3. Niet nach Anspruch 1,
**gekennzeichnet durch** eine konkave Oberflächengestalt der Nietfußstirnfläche (2).

4. Niet nach Anspruch 1,
**dadurch gekennzeichnet dass** die Stirnbreite (12) 15% des Nietfußaußendurchmessers (19) beträgt.

5. Niet nach einem oder mehreren der vorhergehenden Ansprüche,
**dadurch gekennzeichnet, dass** der Quotien aus Schaftraumhohlraumlänge (20) und Nietfußaußendurchmesser (19) 0,6 beträgt.

6. Niet nach einem oder mehreren der vorhergehenden Ansprüche,
**gekennzeichnet durch**
- einen Nietkopfdurchmesser (22) von 7,75 mm,
- eine Gesamtnietlänge (21) von 5 mm,
- eine Schafthohlraumlänge (20) von 3 mm,
- einen Nietfußaußendurchmesser (19) von 5,3 mm,
- eine Stirnbreite (12) von 0,8 mm und
- einen Kegelwinkel des Hohlraums (18) von 54°.

## Claims

1. Semitubular rivet made of light metal
• with a blunt rivet foot (2),
• with a cylindrical rivet shank (13),
• with a rivet foot end face (2) extending at right angles to the central longitudinal axis (17) of the rivet shank (13), **characterized by**
• an end width of the rivet foot (2) of between 8% and 20% of the rivet foot outside diameter (19),
• a cavity (18) in the rivet foot (2), which cavity widens conically towards the rivet foot end face (2),
• a quotient resulting from the shank cavity length (20) and the rivet foot outside diameter (19) of between 0.3 and 0.7, and
• a cone angle of the cavity (18) widening conically towards the rivet foot end face (2) of between 50° and 60°.

2. Rivet according to Claim 1, **characterized by** aluminium or an aluminium alloy as the light metal.

3. Rivet according to Claim 1, **characterized by** a concave surface shape of the rivet foot end face (2).

4. Rivet according to Claim 1, **characterized in that** the end width (12) is 15% of the rivet foot outside diameter (19).

5. Rivet according to one or more of the preceding claims, **characterized in that** the quotient resulting from the shank cavity length (20) and the rivet foot outside diameter (19) is 0.6.

6. Rivet according to one or more of the preceding claims, **characterized by**
- a rivet head diameter (22) of 7.75 mm,
- an overall rivet length (21) of 5 mm,
- a shank cavity length (20) of 3 mm,
- a rivet foot outside diameter (19) of 5.3.mm,
- an end width (12) of 0.8 mm and
- a cone angle of the cavity (18) of 54°.

## Revendications

1. Rivet semi-creux en métal léger, comportant
- un pied de rivet évasé (2),
- une tige de rivet cylindrique (13),
- une surface frontale du pied de rivet (2), qui s'étend perpendiculairement à l'axe longitudinal central (17) de la tige de rivet (13),
**caractérisé par**
- une largeur frontale du pied de rivet (2), qui est de 8 % à 20 % du diamètre extérieur (19) du pied de rivet,
- une cavité (18) au niveau du pied de rivet (2), qui va en s'élargissant en forme conique vers la surface frontale du pied de rivet (2),
- un quotient entre la longueur de cavité de tige (20) et le diamètre extérieur (19) du pied de rivet compris entre 0,3 et 0,7, ainsi que par
- un angle conique de la cavité (18) qui va en s'élargissant en forme conique vers la surface frontale du pied de rivet (2), compris entre 50° et 60°.

2. Rivet selon la revendication 1, **caractérisé par** de l'aluminium ou par un alliage d'aluminium à titre de métal léger.

3. Rivet selon la revendication 1, **caractérisé par** une configuration de surface concave de la surface frontale du pied de rivet (2).

4. Rivet selon la revendication 1, **caractérisé en ce que** la largeur frontale (12) s'élève à 15 % du diamètre extérieur (19) du pied de rivet.

5. Rivet selon l'une ou plusieurs des revendications précédentes, **caractérisé en ce que** le quotient entre la longueur de cavité de tige (20) et le diamètre extérieur (19) du pied de rivet s'élève à 0,6.

6. Rivet selon l'une ou plusieurs des revendications précédentes, **caractérisé par**
- un diamètre (22) de la tête de rivet de 7,75 mm,
- une longueur totale (21) du rivet de 5 mm,
- une longueur de cavité de tige (20) de 3 mm,
- un diamètre extérieur (19) du pied de rivet de 5,3 mm,
- une largeur frontale (12) de 0,8 mm, et par
- un angle conique de la cavité (18) de 54°.
